(19) Europäisches Patentamt
European Patent Office
Office européen des brevets

(11) Publication number: **0 159 014**
**B1**

(12) # EUROPEAN PATENT SPECIFICATION

(45) Date of publication of patent specification: **17.01.90**

(51) Int. Cl.[5]: **C 09 K 11/85**

(21) Application number: **85104582.3**

(22) Date of filing: **16.04.85**

(54) **Phosphor.**

(30) Priority: **17.04.84 JP 77225/84**

(43) Date of publication of application:
**23.10.85 Bulletin 85/43**

(45) Publication of the grant of the patent:
**17.01.90 Bulletin 90/03**

(84) Designated Contracting States:
**DE FR NL**

(56) References cited:
**EP-A-0 021 342**
**EP-A-0 095 741**

(73) Proprietor: **FUJI PHOTO FILM CO., LTD.**
**210 Nakanuma Minami Ashigara-shi**
**Kanagawa 250-01 (JP)**

(72) Inventor: **Takahashi, Kenji c/o Fuji Photo Film Co., Ltd.**
**No. 798 Miyanodai Kaisei-machi**
**Ashigara-kami-gun Kanagawa (JP)**
Inventor: **Nakamura, Takashi c/o Fuji Photo Film Co., Ltd.**
**No. 798 Miyanodai Kaisei-machi**
**Ashigara-kami-gun Kanagawa (JP)**
Inventor: **Hosoi, Yuichi c/o Fuji Photo Film Co., Ltd.**
**No. 798 Miyanodai Kaisei-machi**
**Ashigara-kami-gun Kanagawa (JP)**

(74) Representative: **Patentanwälte Grünecker, Kinkeldey, Stockmair & Partner**
**Maximilianstrasse 58**
**D-8000 München 22 (DE)**

**EP 0 159 014 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a phosphor, and more particularly, to a divalent europium activated complex halide phosphor.

There is well known a divalent europium activated alkaline earth metal fluorohalide phosphor ($M^{II}FX:Eu^{2+}$, in which $M^{II}$ is at least one alkaline earth metal selected from the group consisting of Ba, Sr and Ca; and X is a halogen other than fluorine), as a divalent europium activated alkaline earth metal halide phosphor. The phosphor gives emission (spontaneous emission) in the near ultraviolet region when excited with a radiation such as X-rays. The phosphor also gives emission (stimulated emission) in the near ultraviolet region when excited with an electromagnetic wave such as visible light or infrared rays after exposure to a radiation such as X-rays.

The present inventors have found a novel diavalent europium activated alkaline earth metal halide phosphor having the following formula:

$$M^{II}X_2 \cdot aM^{II}X'_2{:}xEu^{2+}$$

in which $M^{II}$ is at least one alkaline earth metal selected from the group consisting of Ba, Sr and Ca; each of X and X' is at least one halogen selected from the group consisting of Cl, Br, and I, and $X \neq X'$; and *a* and *x* are numbers satisfying the conditions of $0.1 \leqq a \leqq 10.0$ and $0 < x \leqq 0.2$, respectively, and applied for a patent with respect to said phosphor (U.S. Patent Application No. 660,987 and European Patent Application No. 84112417.5).

The novel divalent europium activated alkaline earth metal halide phosphor has been confirmed to have a crystal structure different from that of the above-mentioned $M^{II}FX:Eu^{2+}$ phosphor on the basis of the X-ray diffraction patterns as described in the above application. This phosphor gives spontaneous emission (peak wavelength: approx. 405 nm) in the near ultraviolet to blue region upon exposure to a radiation such as X-rays, ultraviolet rays and cathode rays, and also gives stimulated emission in the near ultraviolet to blue region when excited with an electromagnetic wave having a wavelength within the region of 450—1000 nm after exposure to a radiation such as X-rays, ultraviolet rays and cathode rays. Accordingly, the phosphor is very useful for a radiographic intensifying screen employed in the radiography and for radiation image storage panel employed in the radiation image recording and reproducing method utilizing a stimulable phosphor.

It is desired that the luminance of spontaneous emission and the luminance of stimulated emission of such useful phosphor are as high as possible.

Summary of the Invention

A principal object of the present invention is to provide a novel divalent europium activated alkaline earth metal halide phosphor improved in the luminance of spontaneous emission when excited with a radiation such as X-rays.

Another object of the present invention is to provide a novel divalent europium activated alkaline earth metal halide phosphor improved in the luminance of stimulated emission when excited with an electromagnetic wave having a wavelength within the region of 450—1000 nm after exposed to a radiation such as X-rays.

The phosphor of the invention is a divalent europium activated complex halide phosphor having the formula (I):

$$M^{II}X \cdot aM^{II}X'_2 \cdot bKX'' \cdot cMgX'''_2 \cdot dM^{III}X''''_3{:}xEu^{2+} \quad (I)$$

in which $M^{II}$ is at least one alkaline earth metal selected from the group consisting of Ba, Sr and Ca; $M^{III}$ is at least one trivalent metal selected from the group consisting of Sc, Y, La, Gd and Lu; each of X and X' is at least one halogen selected from the group consisting of Cl, Br and I, and X=X'; each of X'', X''' and X'''' is at least one halogen selected from the group consisting of F, Cl, Br and I; *a* is a number satisfying the condition of $0.1 \leqq a \leqq 10.0$; *b, c* and *d* are numbers satisfying the conditions of $0 \leqq b \leqq 2.0$, $0 \leqq c \leqq 2.0$ and $0 \leqq d \leqq 2.0$, and $2\times10^{-5} \leqq b+c+d$; and *x* is a number satisfying the condition of $0 < x \leqq 0.2$.

The present invention accomplishes the improvement in the luminance of spontaneous emission of the above mentioned novel divalent europium activated alkaline earth metal halide phosphor, which is given when it is excited with a radiation such as X-rays, by incorporating thereinto at least one metal halide selected from the group consisting of potassium halide, magnesium halide and trivalent metal halides in the specific amount.

The present invention also accomplishes the improvement of the luminance of stimulated emission of the novel phosphor, given when it is excited with an electromagnetic wave having a wavelength within the region of 450—1000 nm after exposure to a radiation such as X-rays, by incorporating the specific amount of magnesium halide thereinto.

Brief Description of the Drawings

Fig. 1 shows a relationship between *b* value and luminance of spontaneous emission with respect to $BaCl_2 \cdot BaBr_2 \cdot bKBr:0.001Eu^{2+}$ phosphor, which is an example of the divalent europium activated complex halide phosphor according to the invention.

Fig. 2 shows a relationship between *c* value and luminance of spontaneous emission (solid curve) and a relationship between *c* value and luminance of stimulated emission (dotted curve) with respect to $BaCl_2 \cdot BaBr_2 \cdot cMgF_2:0.001Eu^{2+}$ phosphor, which is an example of the divalent europium activated complex halide phosphor according to the invention.

Fig. 3 shows a relationship between *d* value and luminance of spontaneous emission with respect to $BaCl_2 \cdot BaBr_2 \cdot dYF_3:0.001Eu^{2+}$ phosphor, which is an example of the divalent europium activated complex halide phosphor according to the invention.

Detailed Description of the Invention

The divalent europium activated complex halide phosphor of the present invention can be prepared, for instance, by a process described below.

As starting materials, the following materials can be employed:

(1) at least two alkaline earth metal halides selected from the group consisting of $BaCl_2$, $SrCl_2$, $CaCl_2$, $BaBr_2$, $SrBr_2$, $CaBr_2$, $BaI_2$, $SrI_2$ and $CaI_2$;

(2) at least one potassium halide selected from the group consisting of KF, KCl, KBr and KI;

(3) at least one magnesium halide selected from the group consisting of $MgF_2$, $MgCl_2$, $MgBr_2$ and $MgI_2$;

(4) at least one trivalent metal halide selected from the group consisting of $ScF_3$, $ScCl_3$, $ScBr_3$, $ScI_3$, $YF_3$, $YCl_3$, $YBr_3$, $YI_3$, $LaF_3$, $LaCl_3$, $LaBr_3$, $LaI_3$, $GdF_3$, $GdCl_3$, $GdBr_3$, $GdI_3$, $LuF_3$, $LuCl_3$, $LuBr_3$ and $LuI_3$; and

(5) at least one compound selected from the group consisting of europium compounds such as europium halide, europium oxide, europium nitrate and europium sulfate.

As the above starting material (1), two or more kinds of alkaline earth metal halides having a halogen different from each other are employed. At least one metal halide among the above-mentioned metal halides (2) to (4) (that is, potassium halide, magnesium halide and/or trivalent metal halide) is employed. Further, ammonium halide ($NH_4X$, in which X is any one of Cl, Br and I) may be employed as a flux.

In the process for the preparation of the phosphor of the invention, the above-mentioned alkaline earth metal halides (1), metal halides (2) to (4) and europium compound (5) are, in the first place, mixed in the stoichiometric ratio corresponding to the formula (II):

$$M^{II}X_2 \cdot aM^{II}X'_2 \cdot bKX'' \cdot cMgX'''_2 \cdot dM^{III}X''''_3:xEu \qquad (II)$$

in which $M^{II}$, $M^{III}$, X, X', X'', X''', X'''', *a*, *b*, *c* and *d* have the same meanings as defined above.

The mixture of starting materials of the phosphor of the present invention is prepared by any one of the following procedures:

i) simply mixing the starting materials (1) to (5);

ii) mixing the starting materials (1) to (4), heating the obtained mixture at a temperature of not lower than 100°C for several hours and then mixing the heat treated mixture with the starting material (5); and

iii) mixing the starting materials (1) to (4) in the form of a solution, drying the solution by reduced pressure drying, vacuum drying or spray drying under heating (preferably, 50—200°C), and then mixing the obtained dry product with the starting material (5).

Further, as a modification of the above procedure ii), there may be mentioned a procedure comprising mixing the starting materials (1) to (5) and subjecting the obtained mixture to the heating treatment; or a procedure comprising mixing the starting materials (1) to (5), subjecting the obtained mixture to the heating treatment and mixing the starting materials (2) to (4) with the heat-treated product. As other modification of the procedure iii), there may be mentioned a procedure comprising mixing the starting materials (1) to (5) in the form of a solution and subjecting the solution to the drying; or a procedure comprising mixing the starting materials (1) to (5) in the form of a solution, subjecting the solution to the drying and mixing the obtained dry product with the starting materials (2) to (4).

The mixing is carried out using a conventional mixing apparatus such as a variety of mixers, a V-type blender, a ball mill and a rod mill in any case of the above described procedures i), ii) and iii).

Then, the resulting mixture of the starting materials is placed in a heat-resistant container such as a quartz boat, an alumina crucible or a quartz crucible, and fired in an electric furnace. The temperature for the firing suitably ranges from 500 to 1300°C, and preferably ranges from 700 to 1000°C. The firing period is determined depending upon the amount of the mixture of starting materials, the firing temperature, etc., and suitably ranges from 0.5 to 6 hours. As the firing atmosphere, there can be employed a weak reducing atmosphere such as a nitrogen gas atmosphere containing a small amount of hydrogen gas or a carbon dioxide gas atmosphere containing carbon monoxide gas. A trivalent europium compound is generally employed as the above-mentioned starting material (5) and in the firing stage, the trivalent europium contained in the mixture is reduced into divalent europium by the weak reducing atmosphere.

The product obtained by firing under the above-mentioned conditions is taken out of the furnace, allowed to stand for cooling, and pulverized. The pulverized product may be again placed in the heat-resistant container and fired in the electric furnace (second firing). In the second firing, the temperature of

the firing suitably ranges from 500 to 800°C and the firing period suitably ranges from 0.5 to 12 hours. For carrying out the second firing, there can be employed an inert atmosphere such as a nitrogen gas atmosphere or an argon gas atmosphere, as well as the above-mentioned weak reducing atmosphere.

Through the firing procedure, a phosphor of the present invention is produced. The phosphor thus obtained may be processed in a conventional manner involving a variety of procedures for the preparation of phosphors such as a washing procedure, a drying procedure and a seiving procedure.

The phosphor of the present invention prepared in accordance with the above-described process is a divalent europium activated complex halide phosphor having the formula (I):

$$M^{II}X_2 \cdot aM^{II}X'_2 \cdot bKX'' \cdot cMgX'''_2 \cdot dM^{III}X''''_3{:}xEu^{2+} \qquad (I)$$

in which $M^{II}$ is at least one alkaline earth metal selected from the group consisting of Ba, Sr and Ca; $M^{III}$ is at least one trivalent metal selected from the group consisting of Sc, Y, La, Gd and Lu; each of X and X' is at least one halogen selected from the group consisting of Cl, Br and I, and X = X'; each of X'', X''' and X'''' is at least one halogen selected from the group consisting of F, Cl, Br and I; *a* is a number satisfying the condition of $0.1 \leqq a \leqq 10.0$; *b, c* and *d* are numbers satisfying the conditions of $0 \leqq b \leqq 2.0$, $0 \leqq c \leqq 2.0$ and $0 \leqq d \leqq 2.0$, and $2\times10^{-5} \leqq b+c+d$; and *x* is a number satisfying the condition of $0 < x \leqq 0.2$.

From the viewpoint of enhancement in the luminance of spontaneous emission, the phosphor of the present invention having the formula (I) contains at least one element selected from the group consisting of potassium halide (KX''), magnesium halide ($MgX'''_2$) and trivalent metal halide ($M^{III}X''''_3$). From the viewpoint of enhancement in the luminance of stimulated emission, the phosphor of the invention contains at least magnesium halide.

Further, from the viewpoint of enhancement in the luminance of spontaneous emission, the number for *b* in the formula (I) which indicates the amount of KX'' is preferably within the range of $2\times10^{-3} \leqq b \leqq 1.6$. From the viewpoint of enhancement in the luminance of spontaneous emission and stimulated emission, $MgX'''_2$ is preferably $MgF_2$ and the number for *c* indicating the amount of $MgX'''_2$ is preferably within the range of $4\times10^{-5} \leqq c \leqq 0.6$. From the viewpoint of enhancement in the spontaneous emission, the number for *d* indicating the amount of $M^{III}X''''_3$ is preferably within the range of $4\times10^{-4} \leqq d \leqq 0.2$.

From the viewpoint of enhancement in the luminance of stimulated emission and spontaneous emission, the number for *a* in the formula (I) which indicates the ratio between $M^{II}X_2$ and $M^{II}X'_2$ is preferably within the range of $0.3 \leqq a \leqq 3.3$ and more preferably of $0.5 \leqq x \leqq 2.0$, and the number for *x* indicating the amount of europium activator is preferably within the range of $10^{-5} \leqq x \leqq 10^{-1}$.

The phosphor of the present invention is very useful as a phosphor employed in a radiation image storage panel for the radiation image recording and reproducing method, or in a radiographic intensifying screen for the conventional radiography, both panel and screen being used in medical radiography such as X-ray photography for medical diagnosis and industrial radiography for non-destructive inspection.

The present invention will be illustrated by the following examples.

## Example 1

To 800 ml of distilled water ($H_2O$) were added 333.2 g. of barium bromide ($BaBr_2 \cdot 2H_2O$), 244.3 g. of barium chloride ($BaCl_2 \cdot 2H_2O$), 0.238 g. of potassium bromide (KBr) and 0.783 g. of europium bromide ($EuBr_3$), and they were mixed to obtain an aqueous solution. The aqueous solution was dried at 60°C under reduced pressure for 3 hours and further dried at 150°C under vacuum for another 3 hours to obtain a mixture of the starting materials for the preparation of a phosphor.

The mixture thus obtained was placed in an alumina crucible, which was, in turn, placed in a high-temperature electric furnace. The mixture was then fired at 900°C for 1.5 hours under a carbon dioxide atmosphere containing carbon monoxide. After the firing was complete, the crucible was taken out of the furnace and allowed to stand for cooling. Thus, a divalent europium activated complex halide phosphor ($BaCl_2 \cdot BaBr_2 \cdot 2\times10^{-3}KBr{:}0.001Eu^{2+}$) was obtained.

Further, the amount of potassium bromide was varied within the range of 0—2.0 mols per 1 mol of $BaCl_2 \cdot BaBr_2$ to obtain a variety of divalent europium activated complex halide phosphors having a different amount of potassium bromide ($BaCl_2 \cdot BaBr_2 \cdot bKBr{:}0.001Eu^{2+}$).

The phosphors obtained in Example 1 were exposed to X-rays at 80 KVp, to measure the luminance of spontaneous emission. The results are shown in Fig. 1.

Fig. 1 graphically shows a relationship between an amount of potassium bromide (*b* value) and luminance of spontaneous emission with respect to $BaCl_2 \cdot BaBr_2 \cdot bKBr{:}0.001Eu^{2+}$ phosphor.

As is evident from Fig. 1, the $BaCl_2 \cdot BaBr_2 \cdot bKBr{:}0.001Eu^{2+}$ phosphor of the present invention having *b* value within the range of $0 \leqq b \leqq 2.0$ was enhanced in the luminance of spontaneous emission. Particularly, the phosphor having *b* value within the range of $2\times10^{-3} \leqq b \leqq 1.6$ showed the spontaneous emission of high luminance.

## Example 2

The procedure of Example 1 was repeated except for using 0.116 g. of potassium fluoride (KF) instead of potassium bromide, to obtain a divalent europium activated complex halide phosphor ($BaCl_2 \cdot BaBr_2 \cdot 2\times10^{-3}KF{:}0.001Eu^{2+}$).

Example 3

The procedure of Example 1 was repeated except for using 0.149 g. of potassium chloride (KCl) instead of potassium bromide, to obtain a divalent europium activated complex halide phosphor ($BaCl_2 \cdot BaBr_2 \cdot 2\times10^{-3}KCl:0.001Eu^{2+}$).

Example 4

The procedure of Example 1 was repeated except for using 0.332 g. of potassium iodide (KI) instead of potassium bromide, to obtain a divalent europium activated complex halide phosphor ($BaCl_2 \cdot BaBr_2 \cdot 2\times10^{-3}KI:0.001Eu^{2+}$).

Comparison Example 1

The procedure of Example 1 was repeated except for adding no potassium bromide, to obtain a divalent europium activated barium chlorobromide phosphor ($BaCl_2 \cdot BaBr_2:0.001Eu^{2+}$).

The phosphors obtained in Examples 2 through 4 and Comparison Example 1 were exposed to X-rays at 80 KVp, to evaluate the luminance of spontaneous emission. The results are set forth in Table 1, wherein the result on the evaluation of the phosphor obtained in Example 1 is also set forth.

TABLE 1

| | Additive component | Relative Luminance of Spontaneous Emission |
|---|---|---|
| Example 1 | KBr | 115 |
| Example 2 | KF | 113 |
| Example 3 | KCl | 108 |
| Example 4 | KI | 110 |
| Com. Example 1 | None | 100 |

Example 5

The procedure of Example 1 was repeated except for using 0.125 g. of magnesium fluoride ($MgF_2$) instead of potassium bromide, to obtain a divalent europium activated complex halide phosphor ($BaCl_2 \cdot BaBr_2 \cdot 2\times10^{-3}MgF_2:0.001Eu^{2+}$).

Further, the amount of magnesium fluoride was varied within the range of 0—2.0 mols per 1 mol of $BaCl_2 \cdot BaBr_2$ to obtain a variety of divalent europium activated complex halide phosphors having a different amount of magnesium fluoride ($BaCl_2 \cdot BaBr_2 \cdot cMgF_2:0.001Eu^{2+}$).

The phosphors obtained in Example 5 were exposed to X-rays at 80 KVp, to measure the luminance of spontaneous emission. The phosphors were also excited with a semi-conductor laser beam (wavelength: 780 nm) after exposure to X-rays at 80 KVp, to measure the luminance of stimulated emission. The results are shown in Fig. 2.

Fig. 2 graphically shows a relationship between an amount of magnesium fluoride (*c* value) and luminance of spontaneous emission (solid curve) and a relationship between *c* value and luminance of stimulated emission (dotted curve) with respect to $BaCl_2 \cdot BaBr_2 \cdot cMgF_2:0.001Eu^{2+}$ phosphor.

As is evident from Fig. 2, the $BaCl_2 \cdot BaBr_2 \cdot cMgF_2:0.001Eu^{2+}$ phosphor of the present invention having *c* value within the range of $0 \leqq c \leqq 2.0$ was enhanced in the luminance of spontaneous emission and/or in the luminance of stimulated emission. Particularly, the phosphor showed the spontaneous emission of high luminance when the *c* value was within the range of $2\times10^{-4} \leqq c \leqq 0.6$, and showed the stimulated emission of high luminance when the *c* value within the range of $4\times10^{-5} \leqq c \leqq 10^{-2}$.

Example 6

The procedure of Example 5 was prepared except for using 0.407 g. of magnesium chloride ($MgCl_2 \cdot 6H_2O$) instead of magnesium fluoride, to obtain a powdery divalent europium activated complex halide phosphor ($BaCl_2 \cdot BaBr_2 \cdot 2\times10^{-3}MgCl_2:0.001Eu^{2+}$).

The phosphors obtained in Example 6 and Comparison Example 1 were exposed to X-rays at 80 KVp, to evaluate the luminance of spontaneous emission. The phosphors were also excited with a semiconductor laser beam (wavelength: 780 nm) after exposure to X-rays at 80 KVp, to evaluate the

luminance of stimulated emission. The results are set forth in Table 2, wherein the result on the evaluation of the phosphor obtained in Example 5 is also set forth.

TABLE 2

| | Additive Component | Relative Luminance | |
|---|---|---|---|
| | | Spontaneous Emission | Stimulated Emission |
| Example 5 | $MgF_2$ | 123 | 136 |
| Example 6 | $MgCl_2$ | 140 | 105 |
| Com. Example 1 | none | 100 | 100 |

Example 7

The procedure of Example 1 was repeated except for using 0.292 g. of yttrium fluoride ($YF_3$) instead of potassium bromide, to obtain a divalent europium activated complex halide phosphor ($BaCl_2 \cdot BaBr_2 \cdot 2\times10^{-3}YF_3:0.001Eu^{2+}$).

Further, the amount of yttrium fluoride was varied within the range of 0—2.0 mols per 1 mol of $BaCl_2 \cdot BaBr_2$ to obtain a variety of divalent europium activated complex halide phosphors having a different amount of yttrium fluoride ($BaCl_2 \cdot BaBr_2 \cdot dYF_3:0.001Eu^{2+}$).

The phosphors obtained in Example 7 were exposed to X-rays at 80 KVp, to measure the luminance of spontaneous emission. The results are shown in Fig. 3.

Fig. 3 graphically shows a relationship between an amount of yttrium fluoride (*d* value) and luminance of spontaneous emission with respect to $BaCl_2 \cdot BaBr_2 \cdot dYF_3:0.001Eu^{2+}$ phosphor.

As is evident from Fig. 3, the $BaCl_2 \cdot BaBr_2 \cdot dYF_3:0.001Eu^{2+}$ phosphor of the present invention having *d* value within the range of $0 \leqq d \leqq 2.0$ was enhanced in the luminance of spontaneous emission. Particularly, the phosphor having *d* value within the range of $4\times10^{-4} \leqq d \leqq 0.2$ showed the spontaneous emission of high luminance.

Example 8

The procedure of Example 7 was repeated except for using 0.204 g. of scandium fluoride ($ScF_3$) instead of yttrium fluoride, to obtain a divalent europium activated complex halide phosphor ($BaCl_2 \cdot BaBr_3 \cdot 2\times10^{-3}ScF_3:0.001Eu^{2+}$).

Example 9

The procedure of Example 7 was repeated except for using 0.428 g. of gadolinium fluoride ($GdF_3$) instead of yttrium fluoride, to obtain a divalent europium activated complex halide phosphor ($BaCl_2 \cdot BaBr_3 \cdot 2\times10^{-3}GdF_3:0.001Eu^{2+}$).

The phosphors obtained in Examples 8 and 9 were exposed to X-rays at 80 KVp, to evaluate the luminance of spontaneous emission. The results on the evaluation of the phosphors are set forth in Table 3, wherein the results on the evaluation of the phosphors obtained in Example 7 and Comparison Example 1 are also set forth.

TABLE 3

| | Additive Component | Relative Luminance of Spontaneous Emission |
|---|---|---|
| Example 7 | $YF_3$ | 127 |
| Example 8 | $ScF_3$ | 115 |
| Example 9 | $GdF_3$ | 108 |
| Com. Example 1 | none | 100 |

**Claims**

1. A divalent europium activated complex halide phosphor having the formula (I):

$$M^{II}X_2 \cdot aM^{II}X'_2 \cdot bKX'' \cdot cMgX'''_2 \cdot dM^{III}X''''_3 : xEu^{2+} \quad (I)$$

in which $M^{II}$ is at least one alkaline earth metal selected from the group consisting of Ba, Sr and Ca; $M^{III}$ is at least one trivalent metal selected from the group consisting of Sc, Y, La, Gd and Lu; each of X and X′ is at least one halogen selected from the group consisting of Cl, Br and I, and $X \neq X'$; each of X″, X‴ and X⁗ is at least one halogen selected from the group consisting of F, Cl, Br and I; *a* is a number satisfying the condition of $0.1 \leqq a \leqq 10.0$; *b, c* and *d* are numbers satisfying the conditions of $0 \leqq b \leqq 2.0$, $0 \leqq c \leqq 2.0$ and $0 \leqq d \leqq 2.0$, and $2 \times 10^{-5} \leqq b+c+d$; and *x* is a number satisfying the condition of $0 < x \leqq 0.2$.

2. The phosphor as claimed in claim 1, in which *a* in the formula (I) is a number satisfying the condition of $0.3 \leqq a \leqq 3.3$.

3. The phosphor as claimed in claim 1, in which *b* in the formula (I) is a number satisfying the condition of $2 \times 10^{-3} \leqq b \leqq 1.6$.

4. The phosphor as claimed in claim 1, in which *c* in the formula (I) is a number satisfying the condition of $4 \times 10^{-5} \leqq c \leqq 0.6$.

5. The phosphor as claimed in claim 1, in which *d* in the formula (I) is a number satisfying the condition of $4 \times 10^{-4} \leqq d \leqq 0.2$.

6. The phosphor as claimed in claim 1, in which $M^{II}$ in the formula (I) is Ba.

7. The phosphor as claimed in claim 1, in which $M^{III}$ in the formula (I) is Y.

8. The phosphor as claimed in claim 1, in which each of X and X′ in the formula (I) is Cl or Br.

9. The phosphor as claimed in claim 1, in which *x* in the formula (I) is a number satisfying the condition of $10^{-5} \leqq x \leqq 10^{-1}$.

**Patentansprüche**

1. Mit zweiwertigem Europium aktivierter Komplexhalogenid-Leuchtstoff mit der Formel I

$$M^{II}X_2 \cdot aM^{II}X'_2 \cdot bKX'' \cdot cMgX'''_2 \cdot dM^{III}X''''_3 : Eu^{2+} \quad (I)$$

worin

$M^{II}$ wenigstens ein Erdalkalimetall, gewählt aus der Gruppe, bestehend aus Ba, Sr und Ca, ist; $M^{III}$ wenigstens ein dreiwertiges Metall, gewählt aus der Gruppe, bestehend aus Sc, Y, La, Gd und Lu, ist; jedes X und X′ wenigstens ein Halogen, gewählt aus der Gruppe, bestehend aus Cl, Br und I, ist und $X \neq X'$; jedes X″, X‴ und X⁗ wenigstens ein Halogen, gewählt aus der Gruppe, bestehend aus F, Cl, Br und I, ist; a eine Zahl ist, die der Bedingung $0{,}1 \leqq a \leqq 10{,}0$ genügt; b, c und d Zahlen sind, die den Bedingungen $0 \leqq b \leqq 2{,}0$, $0 \leqq c \leqq 2{,}0$ und $0 \leqq d \leqq 2{,}0$ und $2 \times 10^{-5} \leqq b+c+d$ genügen; und x eine Zahl ist, die der Bedingung $0 < x \leqq 0{,}2$ genügt.

2. Leuchtstoff nach Anspruch 1, worin a in der Formel I eine Zahl ist, die der Bedingung $0{,}3 \leqq a \leqq 3{,}3$ genügt.

3. Leuchtstoff nach Anspruch 1, worin b in der Formel I eine Zahl ist, die der Bedingung $2 \times 10^{-3} \leqq b \leqq 1{,}6$ genügt.

4. Leuchtstoff nach Anspruch 1, worin c in der Formel I eine Zahl ist, die der Bedingung $4 \times 10^{-5} \leqq c \leqq 0{,}6$ genügt.

5. Leuchtstoff nach Anspruch 1, worin d in der Formel I eine Zahl ist, die der Bedingung $4 \times 10^{-4} \leqq d \leqq 0{,}2$ genügt.

6. Leuchtstoff nach Anspruch 1, worin $M^{II}$ in der Formel I Ba ist.

7. Leuchtstoff nach Anspruch 1, worin $M^{III}$ in der Formel I Y ist.

8. Leuchtstoff nach Anspruch 1, worin jedes X und X' in der Formel I Cl oder Br ist.

9. Leuchtstoff nach Anspruch 1, worin x in der Formel I eine Zahl ist, die der Bedingung $10^5 \leqq x \leqq 10^{-1}$ genügt.

**Revendications**

1. Matière luminescente d'halogénure complexe activé par l'europium divalent dont la formule (I) est:

$$M^{II}X_2 \cdot aM^{II}X'_2 \cdot bKX'' \cdot cMgX'''_2 \cdot dM^{III}X''''_3 : Eu^{2+} \qquad (I)$$

où $M^{II}$ est au moins un métal alcalino-terreux sélectionné dans le groupe composé par Ba, Sr et Ca; $M^{III}$ est au moins un métal trivalent sélectionné dans le groupe composé par Sc, Y, La, Gd et Lu; X est X' sont chacun au moins un halogène sélectionné dans le groupe composé par Cl, Br et I avec $X \neq X'$; X'', X''' et X'''' sont chacun au moins un halogène sélectionné dans le groupe composé par F, Cl, Br, et I; *a* est un nombre remplissant la condition $0,1 \leqq a \leqq 10,0$; *b*, *c* et *d* sont des nombres remplissant les conditions $0 \leqq b \leqq 2,0$, $0 \leqq c \leqq 2,0$ et $0 \leqq d \leqq 2,0$, avec $2 \times 10^{-5} \leqq b+c+d$, et *x* est un nombre remplissant la condition $0 < x \leqq 0,2$.

2. Matière luminescente selon la revendication 1, dans laquelle la valeur *a* dans la formule (I) est un nombre remplissant la condition $0,3 \leqq a \leqq 3,3$.

3. Matière luminescente selon la revendication 1, dans laquelle la valeur *b* dans la formule (I) est un nombre remplissant la condition $2 \times 10^{-3} \leqq b \leqq 1,6$.

4. Matière luminescente selon la revendication 1, dans laquelle la valeur *c* dans la formule (I) est un nombre remplissant la condition $4 \times 10^{-5} \leqq c \leqq 0,6$.

5. Matière luminescente selon la revendication 1, dans laquelle la valeur *d* dans la formule (I) est un nombre remplissant la condition $4 \times 10^{-4} \leqq d \leqq 0,2$.

6. Matière luminescente selon la revendication 1, dans laquelle $M^{II}$ est Ba dans la formule (I).

7. Matière luminescente selon la revendication 1, dans laquelle $M^{III}$ est Y dans la formule (I).

8. Matière luminescente selon la revendication 1, dans laquelle X et X' sont chacun Cl ou Br dans la formule (I).

9. Matière luminescente selon la revendication 1, dans laquelle la valeur *x* dans la formule (I) est un nombre remplissant la condition $10^{-5} \leqq x \leqq 10^{-1}$.

FIG. 1

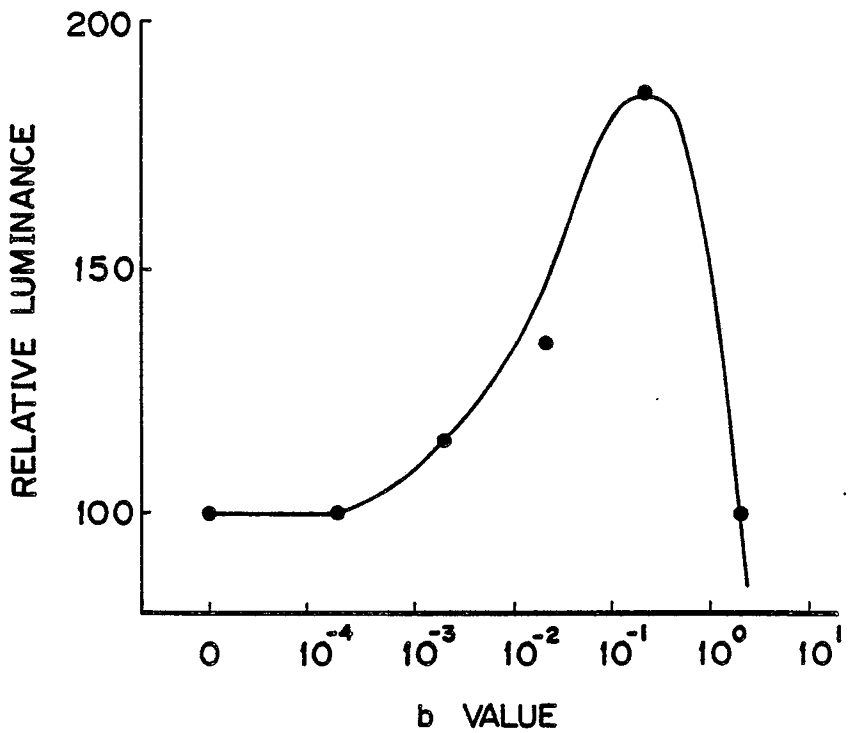
200
150
100
RELATIVE LUMINANCE
0
$10^{-4}$
$10^{-3}$
$10^{-2}$
$10^{-1}$
$10^{0}$
$10^{1}$
b VALUE

FIG. 2

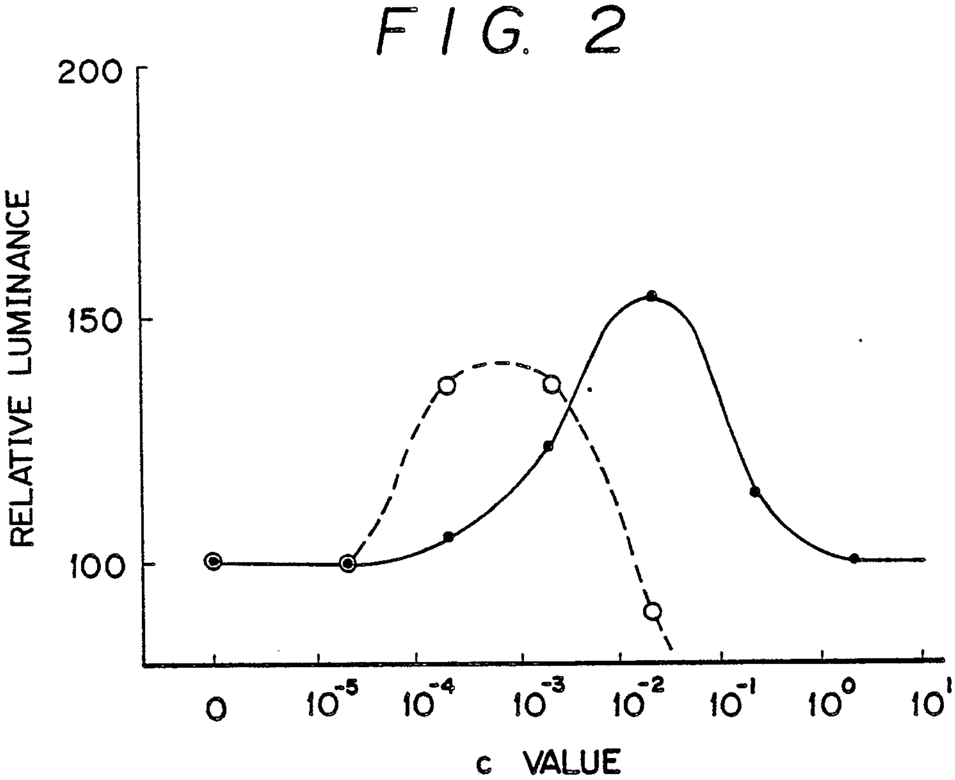

200
150
100
RELATIVE LUMINANCE
0
$10^{-5}$
$10^{-4}$
$10^{-3}$
$10^{-2}$
$10^{-1}$
$10^{0}$
$10^{1}$
c VALUE


FIG. 3

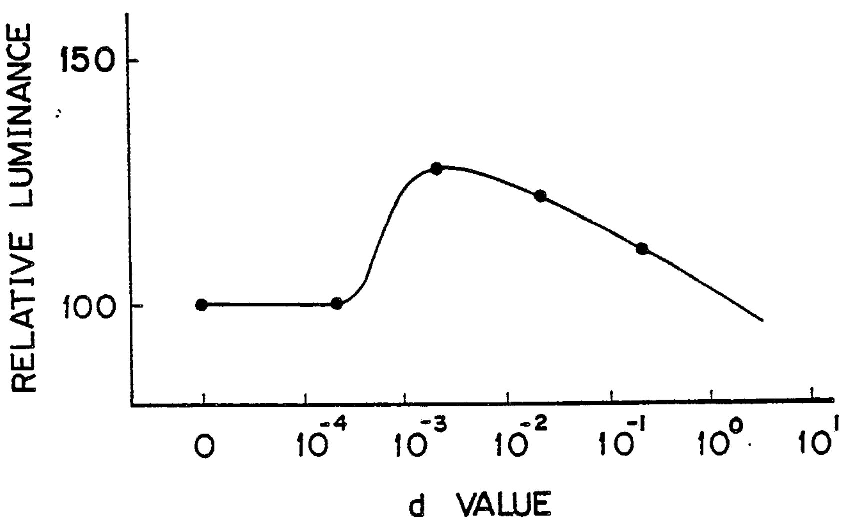

150
100
RELATIVE LUMINANCE
0
$10^{-4}$
$10^{-3}$
$10^{-2}$
$10^{-1}$
$10^{0}$
$10^{1}$
d VALUE